(19) **Europäisches Patentamt / European Patent Office / Office européen des brevets**

(11) **EP 4 520 486 A1**

(12) # EUROPEAN PATENT APPLICATION

(43) Date of publication:
**12.03.2025 Bulletin 2025/11**

(21) Application number: **24194530.2**

(22) Date of filing: **14.08.2024**

(51) International Patent Classification (IPC):
**B25J 9/16** (2006.01)        **H01R 43/20** (2006.01)
**H01R 43/26** (2006.01)

(52) Cooperative Patent Classification (CPC):
**B25J 9/1697; B25J 9/1687; H01R 43/20;**
**H01R 43/26;** G05B 2219/25321

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **05.09.2023 US 202318460968**

(71) Applicant: **The Boeing Company**
**Arlington, VA 22202 (US)**

(72) Inventors:
• **MOHLMAN, Shawn David**
  **Arlington, VA, 22202 (US)**
• **BLACKEN, Lars Eric**
  **Arlington, VA, 22202 (US)**
• **MITCHELL, Bradley J.**
  **Arlington, VA, 22202 (US)**
• **MCCASKEY, Jeffrey Alan**
  **Arlington, VA, 22202 (US)**
• **BARLETTA, Aldo Mario**
  **Arlington, VA, 22202 (US)**
• **STAPLETON, Elle Szuanne**
  **Arlington, VA, 22202 (US)**
• **CHAN, Darren**
  **Arlington, VA, 22202 (US)**
• **JOHNSON, Joel Douglas**
  **Arlington, VA, 22202 (US)**
• **LAMPKINS, Joshua**
  **Arlington, VA, 22202 (US)**
• **MCALLISTER, Wyatt**
  **Arlington, VA, 22202 (US)**

(74) Representative: **Hoffmann Eitle**
**Patent- und Rechtsanwälte PartmbB**
**Arabellastraße 30**
**81925 München (DE)**

(54) **ROBOTIC INSERTION FOR MODULAR CABLE CONNECTOR**

(57)     In an example, a method (300) for assembly of a modular cable connector (200A) includes, at an end effector (404) of a robotic insertion system (400), holding a cable insert module (406) for insertion into a module slot (418B) of a module retainer (408). Two or more images (500A-C) are captured of the module retainer (408). Image processing is performed to identify a segmented image region (504) corresponding to the module retainer (408) and a virtual plane (506) parallel to a face of the module retainer (408). The end effector (404) is moved to an alignment pose (900) determined based at least in part on the segmented image region (504) and the virtual plane (506). The end effector (404) is moved from the alignment pose (900) toward an insertion pose (902). Upon insertion of the cable insert module (406) into the module slot (418B) of the module retainer (408), the cable insert module (406) is released from the end effector (404).

EP 4 520 486 A1

**Description**

FIELD

The invention relates generally to robotic insertion techniques, and more particularly, techniques for assembly of a modular cable connector via robotic insertion of individual modules.

BACKGROUND

Various types of connectors are often used to conductively couple one cable to another, and/or couple a cable to an electronic device, for transmission of data and/or power. The specific size, shape, and design of the connector used is often influenced by the type, purpose, and location of the cable to which the connector is attached, and this affects the manner in which the connector is manufactured and assembled.

SUMMARY

This summary is not an extensive overview of the specification. It is intended to neither identify key or critical elements of the specification nor delineate any scope particular to embodiments of the specification, or any scope of the claims. Its sole purpose is to present some concepts of the specification in a simplified form as a prelude to the more detailed description that is presented in this disclosure.

In an example, a method for assembly of a modular cable connector includes, at an end effector of a robotic insertion system, holding a cable insert module for insertion into a module slot of a module retainer. Two or more images are captured of the module retainer. Image processing is performed to identify a segmented image region corresponding to the module retainer and a virtual plane parallel to a face of the module retainer. The cable insert module is moved to an alignment pose determined based at least in part on the segmented image region and the virtual plane. The cable insert module is moved from the alignment pose toward an insertion pose. Upon insertion of the cable insert module into the module slot of the module retainer, the cable insert module is released from the end effector.

The features, functions, and advantages that have been discussed can be achieved independently in various embodiments or can be combined in yet other embodiments, further details of which can be seen with reference to the following description and drawings.

BRIEF DESCRIPTION OF THE DRAWINGS

FIG. 1 depicts example cable insert modules and module retainers configured to removably retain the cable insert modules.

FIGS. 2A and 2B depict aspects of example modular cable connector assemblies.

FIG. 3 illustrates an example method for assembly of a modular cable connector.

FIGS. 4A and 4B schematically illustrate use of a robotic insertion system to hold a cable insert module for insertion into a module retainer.

FIGS. 5A-C depict example images captured by a camera system of a robotic insertion system.

FIG. 6 schematically illustrates an example computing system performing image processing on captured images.

FIG. 7 schematically illustrates identification of a segmented image region and virtual plane based on captured images.

FIG. 8 schematically illustrates identification of an alignment pose for insertion of a cable insert module based on a segmented image region and virtual plane.

FIGS. 9A-D schematically illustrate use of a robotic insertion system to insert a cable insert module into a module slot of a module retainer.

FIG. 10 schematically illustrates an example computing system controlling insertion of a cable insert module based on a detected insertion force vector.

FIG. 11 schematically shows an example computing system.

DETAILED DESCRIPTION

The present disclosure is directed to automated techniques for assembly of modular cable connectors. The modular cable connectors are usable for connecting electronic cables to one another, and/or connecting cables to suitable electronic devices, for transmission of data and/or power. A modular cable connector includes a plurality of cable insert modules that are removably retained within a module retainer. Cable wires of one or more cables are insertable into cable insertion recesses of the cable insert modules. The modules themselves are then attachable to suitable other components (e.g., such as connectors attached to other cables, or electronic devices) to thereby establish connectivity between such components and the cable wires, and enable transmission of data and/or power. For instance, a cable insert module coupled with a first cable may be attached to a second cable insert module coupled with a second cable to thereby establish connectivity between the two cables.

In particular, the present disclosure primarily focuses on insertion of a cable insert module into a module retainer, as facilitated by a robotic insertion system. Specifically, an end effector affixed to an articulated robot arm of the robotic insertion system holds a cable insert module for insertion into a module slot of a module retainer. A camera system is used to capture two or more images of a module retainer into which the cable insert module is to be inserted. At least one of the two or more images is captured while the module retainer is illuminated by a laser alignment system. The captured images are processed to identify regions of the captured images corresponding to the module retainer. Based on the captured images, the robotic insertion system controls movement of the end effector from an alignment position and orientation (referred to herein as an "alignment pose") toward an insertion position and orientation (or "insertion pose"), as an attempt to insert the cable insert module into the module retainer. The techniques described herein beneficially facilitate automated assembly of modular cable connectors, which can improve the speed and accuracy of cable connector manufacturing, and reduces the manual effort required by human workers.

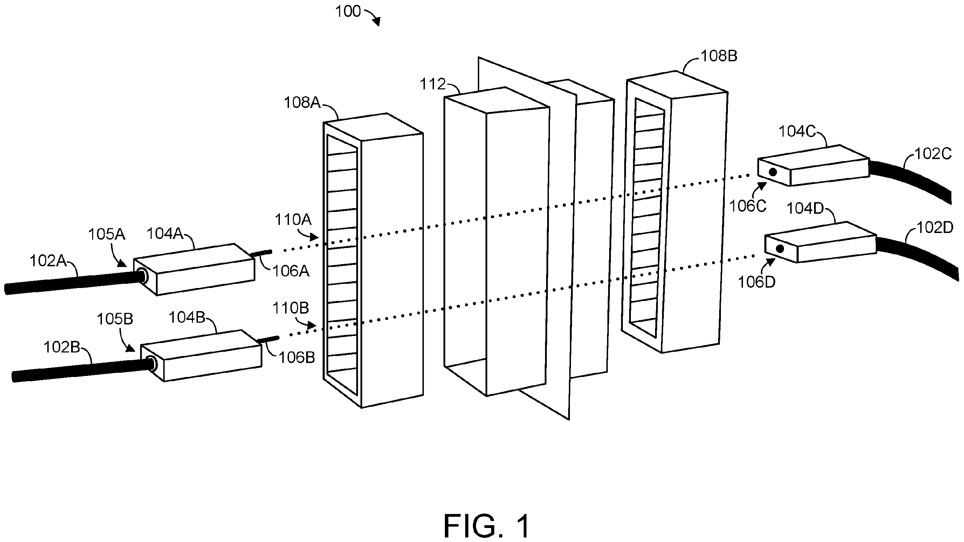

FIG. 1 shows an exploded view of aspects of an example cable connector assembly 100. As will be described in more detail below, the present disclosure is primarily directed to techniques for automated insertion of cable insert modules into module retainers. FIG. 1 serves as an overview of one non-limiting example of a modular cable connector assembly 100 toward which the herein-described robotic insertion techniques may be applied.

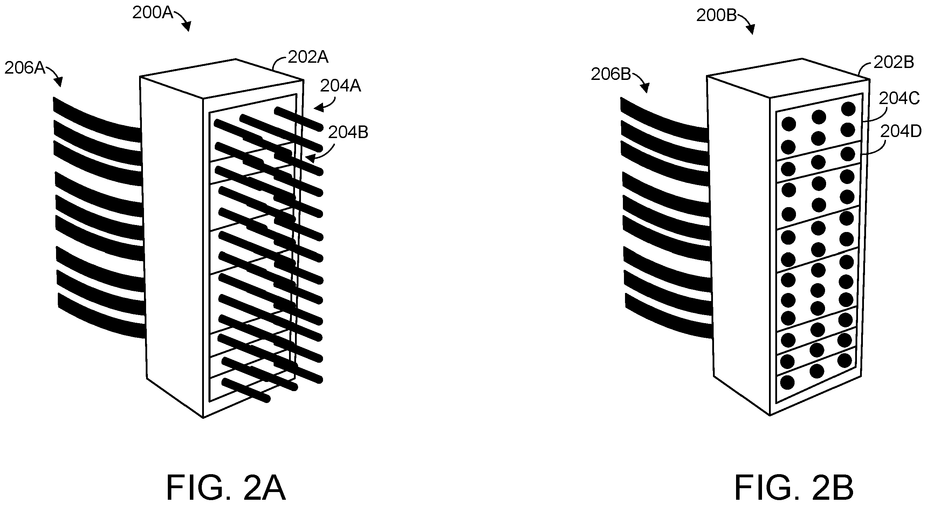

It will be understood that the specific components shown in FIG. 1, as well as the other FIGS. 2A-11 described herein, are highly simplified for the sake of explanation. The sizes, shapes, and specific appearances of the components shown in FIGS. 1-11 are non-limiting and not drawn to scale. Furthermore, it will be understood that the components depicted in FIGS. 1-11 may be constructed from any suitable materials. For example, the cable insert modules, module retainers, and other components of the modular cable connector assemblies described herein may be constructed from any suitable combination of plastics and/or metals, as non-limiting examples.

In the example of FIG. 1, the cable connector assembly is used to establish connectivity between a first pair of cable wires 102A and 102C, and between a second pair of cable wires 102B and 102D. It will be understood that this is non-limiting, and that the connector assemblies described herein may be used to connect any suitable number of wires to one another, and/or to electronic devices such as PCBs. The present disclosure primarily focuses on electrically conductive cables used to transmit electrical power and/or data. However, in some examples, the connector assemblies described herein may be used with cables that are not electrically conductive, but include other suitable transmissive media, such as fiber optic cables.

As used herein, a "cable wire" includes a length of material used for transmission of data and/or power (e.g., copper wire, fiber optic), often coated with a protective material (e.g., plastic or rubber insulation, grounded shielding). In other words, the term "cable wire" is often used herein to refer to more than just the conductive (e.g., copper) or non-conductive (e.g., fiber optic) core of the cable, but may additionally refer to any coating, insulation, and/or shielding applied to the core.

A "cable" includes one or more different cable wires. In cases where a cable only includes one cable wire, then the terms "cable wire" and "cable" may be used interchangeably. However, in some examples, one cable includes two or more cable wires bundled together. For instance, in some embodiments, a cable is a multi-conductor cable including two or more cable wires - e.g., different conductive copper wires are each coated in their own respective insulated cable jackets, and also bundled together in additional insulation and/or shielding to form a multi-conductor cable. In some embodiments, a cable is a shielded twisted pair cable, in which different cable wires include pairs of conductors twisted together and protected by an insulating jacket. The twisted pairs are themselves bundled together and enclosed by additional shielding and/or insulation to form the shielded twisted pair cable.

Continuing with FIG. 1, the cable connector assembly additionally includes cable insert modules 104A-D. As shown, each cable wire 102 is attached to a corresponding cable insert module 104. In this example, each cable insert module is only attached to one cable wire. However, in some cases, multiple cable wires may be attached to the same cable insert module.

Each cable insert module defines a cable insertion recess sized and shaped for insertion of a cable wire. As shown, cable wire 102A is inserted into a cable insertion recess 105A of cable insert module 104A. The cable insertion recesses have any suitable size, based on the size of the cable intended for insertion into the cable insert module. In some examples, different cable insert modules have different sized cable insertion recesses to accommodate different wire gauges.

In some cases, the cable insertion recess is sized to accommodate the insulation jacket surrounding the core of the cable wire (e.g., the copper wire or fiber optic material), such that some length of insulated cable is inserted into the cable insert module. In other examples, the insulation jacket may be trimmed such that only the cable core is inserted into the cable insert module.

For each cable insert module, any suitable length of cable wire may be inserted into the cable insertion recess. In general, the cable wire is inserted sufficiently far into the cable insert module so as to enable transmission of data and/or power between the cable wire and any components that are coupled with a connectivity interface on an opposing face of the cable insert module via a transmission path of the cable insert module. In this manner, a suitable component aligned and coupled with the connectivity interface is effectively coupled with the cable wire, enabling transmission of data and/or power between the cable wire and the component.

The connectivity interface takes any suitable form depending on the implementation. In general a "connectivity interface" refers to any facet or feature of the cable insert module on an opposing face from the cable insert recess, that facilitates transmission of data and/or power with another component that is aligned with and contacts the connectivity interface. This can include a conductive pin or socket integrated into the cable insert module, or a recess of the cable insert module through which conductive components affixed to the cable wire may extend.

As one non-limiting example, the connectivity interface of a cable insertion module may include a conductive pin that is conductively coupled with the cable wire, and sized and shaped for insertion into a pin insertion recess on another component - e.g., on a connector of a second cable, or a complementary interface of an electronic device. This is the case for connectivity interfaces 106A and 106B of cable insert modules 104A and 104B, which include conductive pins that are conductively coupled with corresponding cable wires 102A and 102B.

In some examples, the conductive pins are affixed to the ends of the cable wires - e.g., taking the form of plugs, jacks, or other cable terminators that are crimped, soldered, or otherwise attached to the cable wires and then inserted into the cable insert module. When such cable terminators are used, the cable wire is in some examples inserted sufficiently far into the cable insert module that the conductive pin extends through the connectivity interface of the opposing face of the cable insert module - e.g., the connectivity interface is a recess through which the conductive pin extends.

In other examples, the conductive pin is an integral component of the cable insert module. For instance, the cable terminator may remain within the cable insert module and make contact with conductive features within the module - e.g., the cable terminator may be retained within a complementary conductive socket defined within the cable insert module, with a conductive path between the socket and a conductive pin extending away from the cable insert module. In either case, any suitable mechanism (e.g., clips, crimping) may be used to hold the cable wire in place within the module so as to mitigate the risk of accidental removal.

As another example, a connectivity interface of a cable insertion module in some embodiments takes the form of a pin insertion recess sized and shaped for insertion of a conductive pin of a connector affixed to a cable. This is the case for connectivity interfaces 106C and 106D of cable insert modules 104C and 104D shown in FIG. 1. Specifically, connectivity interfaces 106C and 106D take the form of recesses or sockets conductively coupled with the cable wire inserted into the cable insert module, and/or conductively coupled with a plug, jack, or other termination that is affixed to the end of the cable wire. In this manner, insertion of a conductive pin into the pin Insertion recess conductively couples the pin with the cable wire.

Each cable insert module is sized and shaped for removable retention within a module retainer. In this manner, a stacked set of cable insert modules may each be retained within the same single retainer, where each module is in some cases attached to a different cable. This conveniently enables the populated retainer to serve as a male plug and/or female receptacle for coupling the different cables with suitable other components - e.g., a similar populated retainer attached to a second set of cables, and/or an electronic device such as a PCB.

In FIG. 1, the cable connector assembly includes a module retainer 108A including a plurality of module slots, two of which are labeled as module slots 110A and 110B. Each module slot may be described as a shelf or notch that removably holds an inserted module in place within the retainer. Any suitable mechanism may be used to retain cable insert modules within module slots of a module retainer. For instance, in one example, each cable insert module includes one or more clips that, when the module is inserted into the retainer, occupy corresponding retention apertures of the module retainer. Additionally, or alternatively, the different modules may clip or otherwise attach to one another - e.g., different modules may include complementary clips or other attachment features on their upper and lower faces, such that the modules are attachable together as a single stack.

It will be understood that a module retainer may include any suitable number of two or more module slots, depending on the implementation. In this example, the sizes of the depicted cable insert modules 104A/B are such that each module would, when retained within the module retainer 108A, occupy a single corresponding module slot within the retainer. However, in some embodiments, some cable insert modules are sized to occupy two or more corresponding slots in the module retainer. In general, each cable insert module is sized to occupy an integer number of module slots of the module retainer - e.g., one slot, two slots, or three slots.

FIG. 1 additionally shows a second module retainer 108B. Cable insert modules 104C and 104D comprise a second set of cable insert modules sized and shaped for removable retention within module slots of the second module retainer. Thus, in this example, two different module retainers are used to connect two different sets of cables - e.g., cable wire 102A is coupled with cable wire 102C, and cable wire 102B is coupled with cable wire 102D.

To this end, in FIG. 1, cable connector assembly 100 additionally includes a retainer alignment adapter 112 sized and shaped to hold module retainer 108A in alignment with module retainer 108B. This causes alignment and coupling between complementary cable insert modules retained in matching module slots within the two module retainers 108A and 108B. For instance, when cable insert module 104A is retained within module retainer 108A, and module retainer 108A is held in place by the retainer alignment adapter 112, then the conductive pin 106A of the cable insert module would be aligned and inserted into the pin insertion recess 106C of cable insert module 104C, which is retained within module retainer 108B and also held in place by the retainer alignment adapter 112. This enables transmission of data and/or power between cable wire 102A and cable wire 102C. Connectivity may be established between any suitable number of cable wires and/or cables in this manner, depending on the number of cable insert modules retained within each module retainer, and depending on how many cable wires are insertable into each cable insert module.

FIGS. 2A and 2B show non-limiting examples of modular cable connector assemblies 200A and 200B that have been at least partially assembled. Specifically, FIGS. 2A and 2B depict module retainers that have been fully populated with cable insert modules. In other words, the robotic insertion techniques described herein have been used to insert a plurality of cable insert modules into corresponding module retainers to thereby assemble aspects of a modular cable connector.

Specifically, FIG. 2A shows an example module retainer 202A, which is fully populated with cable insert modules. Two cable insert modules are labeled as modules 204A and 204B. As shown, different modules inserted into the module retainer occupy different numbers of module slots - e.g., module 204A occupies two module slots, while module 204B occupies one module slot. In the example of FIG. 2A, every inserted module uses conductive pins, although it will be understood that this is non-limiting. Rather, any or all of the modules inserted into the module retainer may include pin insertion recesses in addition to, or instead of, conductive pins. As discussed above, one or more cable wires may be inserted into cable insertion recesses of each cable insert module. The cable wires may be bundled together as any suitable number of cables, several of which are shown in FIG. 2A as cables 206A.

FIG. 2B depicts another non-limiting example of a cable connector assembly 200B. Specifically, FIG. 2B shows another example module retainer 202B populated with a plurality of cable insert modules, two of which are labeled as modules 204C and 204D. As compared to FIG. 2A, the modules in module retainer 202B include pin insertion recesses instead of conductive pins. Notably, the arrangement depicted in FIG. 2B is compatible with the arrangement of FIG. 2A - e.g., in other words, modules of retainer 202A may be mated with modules of retainer 202B to facilitate transmission of data and/or power between the cables 206A of FIG. 2A and the cables 206B of FIG. 2B.

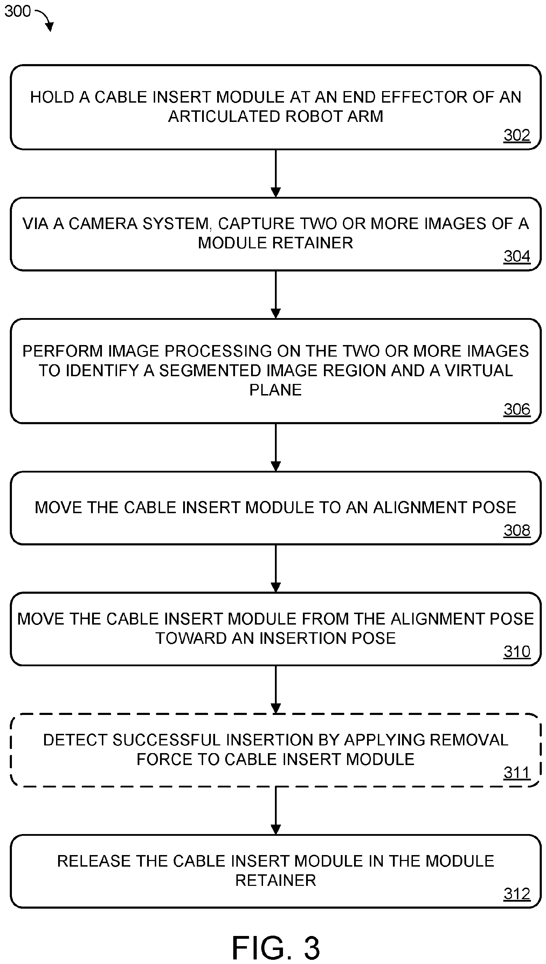

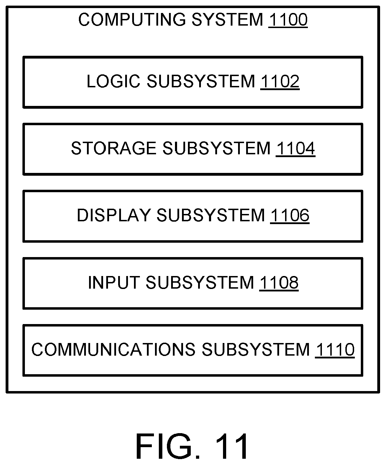

FIG. 3 illustrates an example method 300 for assembling a modular cable connector via a robotic insertion system - e.g., method 300 may be used to insert cable insert modules into module retainers, such as is shown in FIGS. 1 and 2A/2B. Steps of method 300 may be initiated, terminated, and/or repeated at any suitable time and in response to any suitable condition. Method 300 is primarily described as being performed by a robotic insertion system, including a controller that executes software instructions to control movements of an articulated robot arm. In general, it will be understood that steps of method 300 may be performed by any suitable computing system of one or more computing devices, and any computing device implementing steps of method 300 may have any suitable capabilities, hardware configuration, and form factor. In some examples, method 300 is implemented by computing system 1100 described below with respect to FIG. 11.

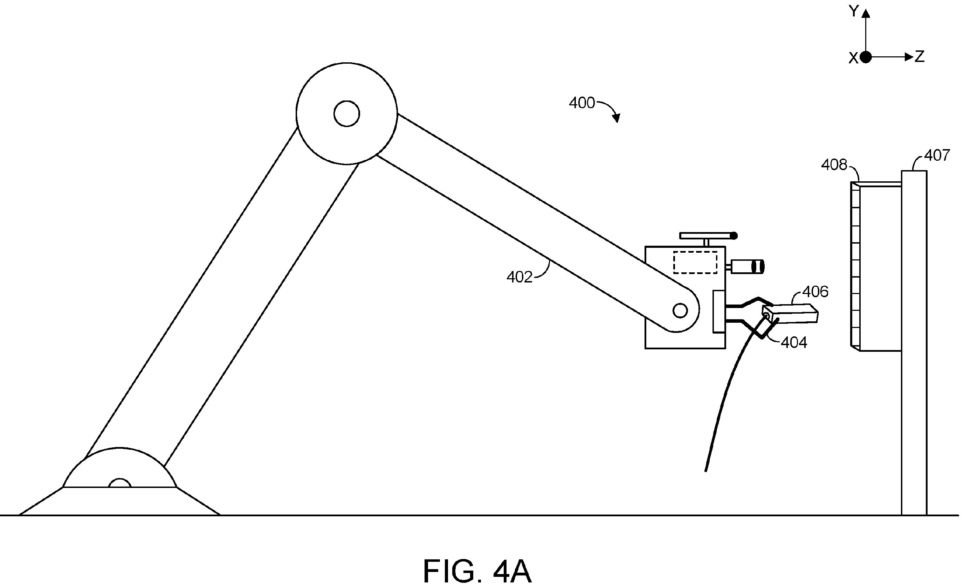

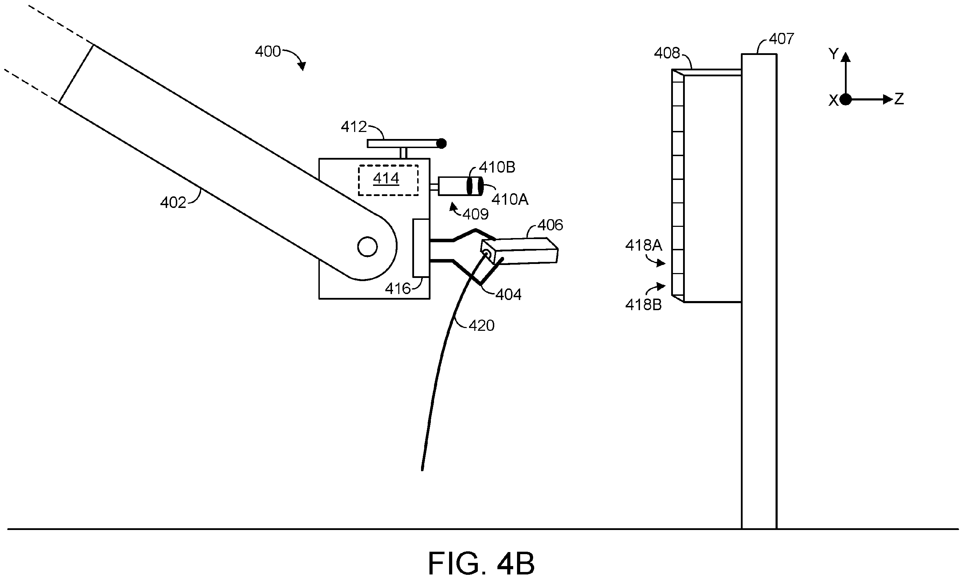

At 302, method 300 includes, at an end effector affixed to an articulated robot arm of a robotic insertion system, holding a cable insert module for insertion into a module slot of a module retainer. This is schematically illustrated with respect to FIGS. 4A and 4B. In particular, FIG. 4A schematically shows an example robotic insertion system 400. It will be understood that robotic insertion system 400 is a non-limiting example, highly simplified, and schematic in nature.

As shown, robotic insertion system 400 includes an articulated robot arm 402. An "articulated robot arm" as described herein takes the form of any computer-controlled robotic mechanism suitable for manipulating physical objects (e.g., physical objects such as cable insert modules) using an end effector. "Manipulating" can include translating and/or rotating the physical objects. Articulated robot arms have any suitable physical capabilities - e.g., range of motion, movement speed, insertion force, and/or weight capacity. In some examples, articulated robot arms have six or more degrees of freedom.

Articulated robot arm 402 is equipped with an end effector 404. In this example, the end effector takes the form of a gripping tool that uses two prongs to hold a cable insert module 406 while the cable insert module is manipulated and eventually inserted into a module retainer 408. The module is mounted to a back plate 407. In this example, end effector 404 relies on friction between the prongs and the surface of the cable insert module to hold the module in place. The pose of the end effector 404, and therefore the pose of the cable insert module 406, is changed by movements of the articulated robot arm 402.

It will be understood that this is only one simplified and non-limiting example of an end effector. In general, an "end effector" takes the form of any suitable mechanism or structure usable to physically hold and manipulate (e.g., translate and/or rotate) an object such as a cable insert module. As non-limiting examples, end effectors may use friction, interlocking geometry, suction, adhesives, and/or magnetism to physically hold a cable insert module during manipulation. In some examples, the articulated robot arm is configured to make use of two or more different end effectors - e.g., the end effectors may be dynamically swappable, and/or two or more end effectors may be affixed to the articulated robot arm at once. End effectors may contact or otherwise interact with any suitable surface or aspect of the cable insert module. For instance, in the non-limiting example of FIG. 4A, the end effector 404 is gripping the sides of the cable insert module 406 near the cable insert recess.

In some examples, the end effector includes one or more mechanisms that are controlled by a computing system (e.g., a controller of the robotic insertion system) to hold and/or release a cable insert module. For instance, in the example of FIG. 4A, a distance between the prongs of the end effector 404 is adjustable by a controller, which enables computerized control over gripping and releasing of the cable insert module 406. In other examples, however, an end effector may be purely mechanical in nature. For instance, in some examples, the end effector relies on springs, interlocking geometry, suction cups, magnets, and/or other suitable tools to temporarily retain the cable insert module, until a retention force of the end effector is overcome by an external force (such as friction between the cable insert module and the interior of the module retainer) and/or facilitate installation.

In some examples, the geometry of the cable insert modules is designed to facilitate manipulation using end effectors. For instance, in some embodiments, facets of the cable insert modules are shaped using concave, pyramidal, and/or chamfered geometries to affect (e.g., increase) the amount of surface area available for gripping by an end effector.

An end effector may pick up (or otherwise begin manipulating) a cable insert module in any suitable way. In some examples, the cable insert module is placed in or on the end effector by a human operator. Additionally, or alternatively, loading of cable insert modules into the robotic insertion system may be at least partially automated. For instance, in one example scenario, the robotic insertion system uses computer vision to recognize a cable insert module, controls movements of the robotic arm to place the end effector at a pose conducive to receiving the cable insert module, controls the end effector (e.g., by controlling a gripping tool) to hold the cable insert module, then performs automated insertion of the cable insert module into a module retainer, as will be described in more detail below. In another example scenario, the robotic insertion system controls the robotic arm to move the end effector to a predefined initial pose to which cable insert modules are delivered (e.g., by another robotic arm, by a human operator, by a mechanism such as a conveyor belt), and then begins the automated insertion process upon some condition being met. Suitable conditions may include, as examples, passage of a predefined length of time, detection of a force consistent with the arrival of a cable insert module, detection of the presence of a cable insert module via a computer vision system, and/or detection of the presence of a cable insert module in any other suitable way.

In the example of FIG. 4A, the end effector 404 is already holding the cable insert module 406, and the end effector 404 is already positioned near, and oriented toward, the module retainer 408. In some examples, a human operator controls movement of the end effector (e.g., by controlling the robot arm, or by holding and moving the end effector) to put the end effector in rough alignment with the module retainer. For instance, a human operator may roughly align the end effector with the module retainer before, during, or after placing a cable insert module in or on the end effector. Additionally, or alternatively, the robotic insertion system is in some examples configured to automatically align itself with the module retainer before, during, or after receiving a cable insert module - e.g., based on a known pose of the module retainer relative to a coordinate system of the robotic insertion system, and/or based on detection of the module retainer (such as via computer vision).

FIG. 4B shows another schematic and simplified view of example robotic insertion system 400, with particular focus on components near the end effector 404. As shown, the end effector 404, a camera system 409, a laser alignment system 412, and other components are disposed on a rectangular structure at the end of the articulated robot arm 402. It will be understood that this specific arrangement is non-limiting and highly simplified. The end effectors, camera systems, laser alignment systems, and other components of the robotic insertion systems described herein may have any suitable relationship relative to one another and relative to the environment.

As will be described in more detail below, the camera system of the robotic insertion system is used to capture two or more images of the module retainer prior to insertion of the cable insert module. In the example of FIG. 4B, camera system 409 includes two different cameras: an RGB camera 410A and a depth camera 410B. In general, a robotic insertion system as described herein includes a camera system of one or more suitable cameras, where each suitable camera may be sensitive to any suitable wavelengths of electromagnetic radiation, and have any suitable image-capture capabilities, including resolution, frame rate, and/or field-of-view.

As one example, the camera system includes one or more RGB cameras, which are sensitive to visible wavelengths of light and output RGB images. In some examples, the camera system includes one or more depth cameras in addition to, or instead of, RGB cameras and/or other suitable cameras. Depth cameras are generally sensitive to infrared light and are configured to output depth images, where pixels of the depth images encode the detected distances between the image sensor of the depth camera and physical objects in the surrounding environment. Any suitable depth-sensing technology may be used - e.g., stereoscopic, structured light, or time-of-flight.

In examples where both RGB and depth cameras are used, they may in some cases be used together as an integrated camera module. As one non-limiting example, an Intel® RealSense™ camera system may be used, which includes both RGB and depth camera modules together in a known alignment, and outputs both RGB and depth image data. As another example, a stereo pair of RGB cameras may be used in addition to, or instead of, a depth camera.

Robotic insertion system 400 additionally includes a laser alignment system 412. As will be described in more detail below, the laser alignment system 412 is used to illuminate at least a portion of the module retainer 408 while one or more images of the module retainer 408 are captured using the camera system 409. The laser alignment system may emit any suitable wavelength and intensity of laser light. Furthermore, such laser light may be emitted with any suitable spatial pattern. As one non-limiting example, the laser light may be emitted as a crosshair pattern (e.g., perpendicular intersecting lines) toward an anticipated position of the module retainer.

In some examples, either or both of the camera system and laser alignment systems are independently movable/steerable relative to the articulated robot arm. For example, either or both of the camera system and laser alignment system may be attached to the articulated robot arm via motorized gimbals, such that movements of the camera system/laser system may be controlled independently of the articulated robot arm. Additionally, or alternatively, the camera system and/or laser system may be statically affixed to the articulated robot arm - e.g., the pose of the camera system and/or laser system is only changed via movements of the articulated robot arm and/or end effector to which they are attached.

In FIG. 4B, the robotic insertion system includes a controller 414. The "controller" takes the form of any suitable computer logic hardware configured to execute software, firmware, and/or hardware-encoded instructions to thereby control operations of the robotic insertion system. For example, controller 414 may control movements of the articulated robot arm 402, gripping/releasing by the end effector 404, operation of the camera system 409, operation of the laser alignment system 412, etc. In this example, the controller is depicted as being "on-board" the robotic insertion system - e.g., integrated into the articulated robot arm. It will be understood that, in some examples, the controller may be at least partially implemented in a housing or structure that is physically separate from the articulated robot arm, and may be communicatively coupled with the articulated robot arm via any suitable wired or wireless connection. In some examples, controller 414 performs one or more steps of method 300. In some examples, controller 414 is implemented as computing system 1100 described below with respect to FIG. 11.

In this example, robotic insertion system 400 additionally includes a force sensor 416 configured to detect an insertion force vector of the end effector 404 during an attempt to insert the cable insert module 406 into the module retainer 408. As will be described in more detail below, detection of an insertion force vector via a force sensor is usable to detect any misalignments between the cable insert module and module retainer that are preventing successful insertion of the cable insert module.

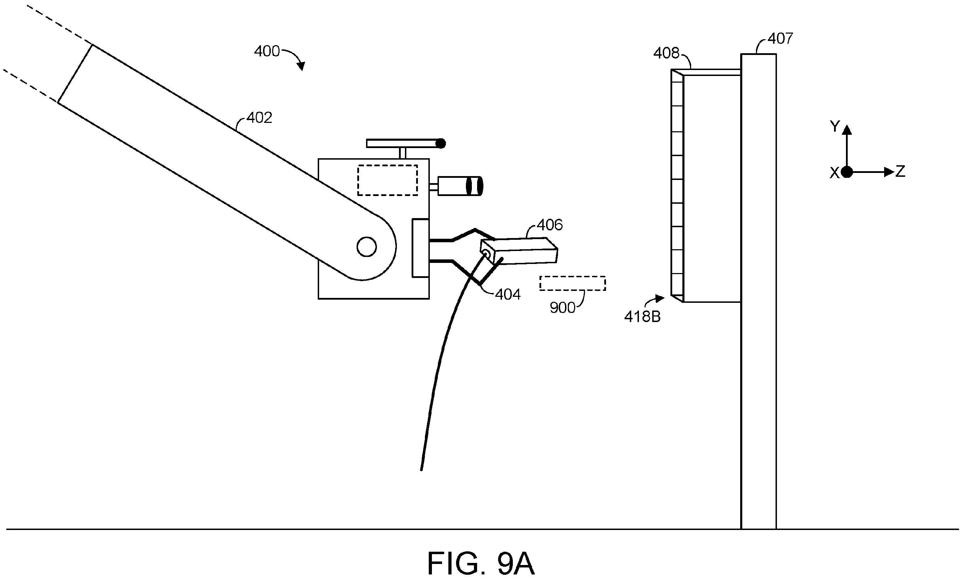

As discussed above, the module retainer 408 includes a plurality of module slots into which cable insert modules may be inserted. Two module slots 418A and 418B are labeled in FIG. 4B. Insertion of cable insert module 406 into module slot 418B will be illustrated and described with respect to FIGS. 9A-D.

Furthermore, in this example, a cable wire 420 is already inserted into cable insert module 406 prior to insertion of the cable insert module into module retainer 408. In general, any suitable number of one or more cable wires may be inserted into a cable insert module prior to its insertion into a module retainer. Additionally, or alternatively, one or more cable wires may be inserted into the cable insert module after it has been inserted into a module retainer. Cable wires are inserted into cable insert modules in any suitable way - e.g., manually by a human operator, and/or via an automated wire insertion process.

Returning briefly to FIG. 3, at 304, method 300 includes, via a camera system of the robotic insertion system, capturing two or more images of the module retainer. At least one of the two or more images is captured while the module retainer is illuminated by a laser alignment system of the robotic insertion system. As described above, the camera system of the robotic insertion system includes any suitable combination of one or more cameras, and each camera has any suitable capabilities. As one example, the camera system includes an RGB camera and a depth camera, and therefore the two or more captured images include at least one RGB image captured by the RGB camera, and at least one depth image captured by the depth camera.

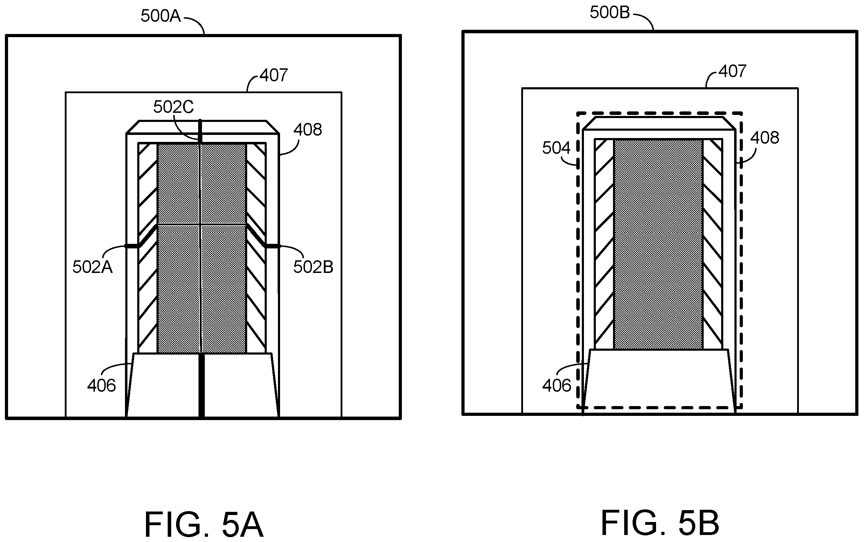

This is illustrated with respect to FIGS. 5A-C, showing example images captured of module retainer 408 by camera system 409 of robotic insertion system 400. FIG. 5A shows an example RGB image 500A captured by RGB camera 410A, in which aspects of the module retainer 408, back plate 407, and cable insert module 406 are visible. In this example, RGB image 500A is a first RGB image captured while module retainer 408 is illuminated by laser alignment system 412. As such, in FIG. 5A, a crosshair pattern is projected onto the module retainer by the laser alignment system. Several laser glints are labeled at points where the laser light is projected onto the edges of the module retainer, including laser glints 502A, 502B, and 502C. As will be described in more detail below, the positions of these laser glints are in some cases used to identify a segmented image region corresponding to the module retainer.

In this example, the RGB camera is also used to capture a second RGB image 500B after deactivation of the laser alignment system. As such, FIG. 5B shows a second example RGB image 500B, again showing module retainer 408 and cable insert module 406. However, in this example, the laser alignment system has been deactivated, and thus the crosshair pattern is no longer projected onto the module retainer.

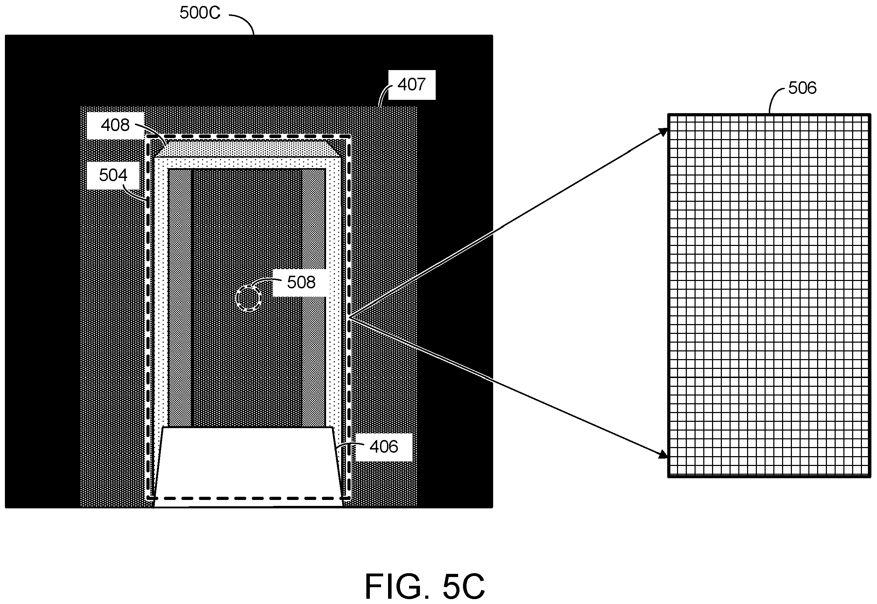

As discussed above, in some examples, the camera system includes a depth camera configured to capture depth images. As such, FIG. 5C shows a representation of an example depth image 500C captured by the depth camera 410B of robotic insertion system 400. As with the RGB images of FIGS. 5A and 5B, depth image 500C depicts the module retainer 408 and cable insert module 406. However, in this case, pixels of the depth image encode depth values expressing the detected distances between the depth camera 410B and the depicted objects - e.g., the module retainer 408 and cable insert module 406. In this example, different shading patterns are used to represent the distances between the depth camera and the depicted objects, where darker shading patterns represent greater distances away from the depth camera.

It will be understood that the images 500A, 500B, and 500C described herein need not be visually rendered or displayed for viewing by a human user. While the images are visually represented in FIGS. 5A-C, this is only done for the sake of illustration. Rather, in some examples, the images are captured and stored by the robotic insertion system for processing as digital data structures that are never visually represented on a computer display, or otherwise presented for viewing.

Furthermore, it will be understood that the specific combination of images shown in FIGS. 5A-C (e.g., two RGB images and one depth image) is non-limiting. In general, any suitable number of RGB images, depth images, and/or other images, may be captured by the camera system. Furthermore, any suitable number of images may be captured while the laser alignment system is actively projecting laser light toward the module retainer, and any suitable number of images may be captured while the laser alignment system is inactive.

Returning briefly to FIG. 3, at 306, method 300 includes performing image processing on the two or more captured images to identify a segmented image region corresponding to the module retainer, and to identify a virtual plane parallel to a face of the module retainer. Non-limiting examples of suitable image processing techniques will be described in more detail below. Notably, in some examples, the segmented image region and/or virtual plane are identified relative to a coordinate system of the robotic insertion system, such that the positions of the segmented image region and/or virtual plane are usable to guide movements of the articulated robot arm and thereby insert the cable insert module.

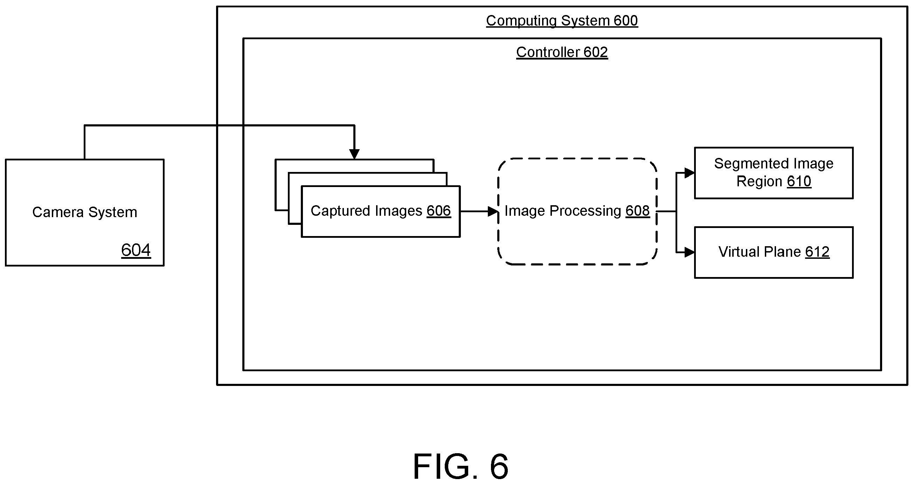

Image processing is schematically illustrated at a high level with respect to FIG. 6. Specifically, FIG. 6 schematically shows a computing system 600 that includes a controller 602. The computing system is communicatively coupled with a camera system 604, which captures a plurality of images 606 depicting a module retainer. The computing system either is, includes, or is communicatively coupled with a robotic insertion system as described herein. For instance, in some examples, robotic insertion system 400 may be implemented as computing system 600. In other examples, the computing system may be substantially separate from, but communicatively coupled with, the robotic insertion system. For instance, computing system 600 may be implemented as a dedicated image processing system that receives and processes images from the robotic insertion system, without otherwise controlling the behavior of the robotic insertion system. In some examples, computing system 600 is implemented as computing system 1100 described below with respect to FIG. 11.

In FIG. 6, the controller 602 receives the captured images 606 and performs one or more image processing steps 608 on the captured images to identify a segmented image region 610, and a virtual plane 612. The segmented image region refers to a set of pixel values determined to correspond to the module retainer, where the set of pixels are identified in, or derived from, one or more of the images captured by the camera system. The virtual plane is in some examples regressed from depth values of a depth image corresponding to coplanar points on the surface of the module retainer, or coplanar points on a flat surface to which the module retainer is affixed (e.g., a retainer alignment adapter). For the sake of illustration, a segmented image region 504 is shown in FIG. 5B, representing pixels of the second RGB image that correspond to the module retainer. Similarly, FIG. 5C shows a representation of a virtual plane 506 that is regressed from depth values of depth image 500C.

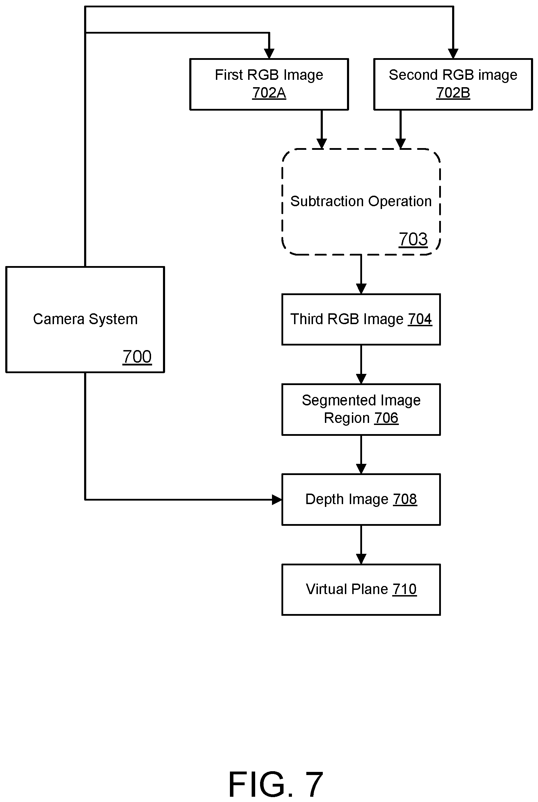

A more specific non-limiting example approach for identifying the segmented image region and virtual plane is illustrated and described with respect to FIG. 7. Specifically, in FIG. 7, a camera system 700 of a robotic insertion system is used to capture several images depicting a module retainer, including a first RGB image 702A and a second RGB image 702B. In this example, one RGB image (e.g., first RGB image 702A) is captured while the module retainer is at least partially illuminated by a laser alignment system. The other RGB image (e.g., second RGB image 702B) is captured after deactivation of the laser alignment system. Generally, the two RGB images are captured relatively close together in time, without changing the pose of the camera system or module retainer, such that the two images provide similar views of the module retainer (with the exception that one image is captured while the laser alignment system is active).

From there, the computing system performs an image subtraction operation 703 based on the first and second RGB images to generate a third RGB image 704. This includes subtracting pixel values of the first RGB image from pixel values of the second RGB image, or vice versa, to generate the third RGB image. In this manner, pixel values of the third RGB image will depend on the relative differences between the first and second RGB images, and these differences will primarily be caused by the fact that one image was captured while illuminated by the laser alignment system. As such, in this example scenario, many of the pixel values of the third RGB image will likely be at or near zero, with the exception of pixel values corresponding to portions of the module retainer that were illuminated by the laser alignment system during capture of one of the first or second RGB images - e.g., the positions of laser glints 502A-C shown in FIG. 5A. In this manner, the positions of the laser glints are detectable in the third RGB image - e.g., as the pixel values having the highest absolute values relative to other pixel values of the third RGB image. This beneficially improves the robustness of the segmentation process to ambient lighting conditions in the environment.

In FIG. 7, a segmented image region 706 is identified based on the pixel values of the third RGB image 704. Any suitable image segmentation techniques may be used. For instance, in one example, the borders of the module retainer within the third RGB image are indicated by the positions of the detected laser glints as described above. As such, segmenting the third RGB image includes, in some examples, identifying a region of pixel values within the third RGB image bordered by the detected positions of the laser glints, to give a segmented image region corresponding to the module retainer.

In the example of FIG. 7, the camera system is additionally used to capture a depth image 708. The segmented image region 706 identified based on the pixel values of the third RGB image 704 is applied to the depth image 708 based on a known alignment between the RGB camera and the depth camera, to thereby identify a set of depth values within the depth image corresponding to the module retainer. In other words, because the alignment between the RGB camera and the depth camera is known, it is possible to identify correspondences between RGB pixels of captured RGB images, and depth pixels of captured depth images, such that two "corresponding" pixels depict approximately the same point in the surrounding real-world environment. In this manner, once the segmented image region is identified within an RGB image, the known alignment between the RGB and depth cameras can be used to identify a corresponding segmented region within the depth image. For instance, in the example of FIGS. 5B and 5C, the segmented image region 504 is shown both in second RGB image 500B, as well as depth image 500C, and in each case corresponds to the module retainer.

The alignment between the cameras is determined in any suitable way. In some examples, as described above, an integrated camera module that includes an RGB camera and a depth camera together. As one non-limiting example, an Intel® RealSense™ camera system may be used, which includes both RGB and depth camera modules together in a known alignment, and outputs both RGB and depth image data. In other examples, any suitable camera alignment techniques may be used to establish a known alignment between a depth camera and one or more RGB cameras, such that corresponding pixels can be identified between RGB images and depth images.

In any case, returning briefly to FIG. 7, a virtual plane 710 is identified based, at least in part, on the depth values of the depth image 708. Any suitable technique may be used for identifying the virtual plane. In some examples, an algorithm is used that regresses the 3D points ($X = <x, y, z>$) identified as corresponding to the surface of the module retainer. For a plurality of coplanar points on the module retainer surface (n = 1, ..., N), the virtual plane may be regressed as follows:

$$reg(X_n) \forall n = 1,...,N \rightarrow f(u,v),\ X_n = <x,\ y,\ z>,$$

Any new point in the image ($u$, $v$) can then be extrapolated as follows:

$$f(u,v) = X'_{u,v},\qquad X'_{u,v} = <x',\ y',\ z'>$$

In some examples, the virtual plane is identified, at least in part, by averaging a subset of depth values within the depth image. For instance, in one approach the depth image may be segmented to give the position of the module retainer, or give the position of a back-plate holding the module retainer in place. The segmented portion of the depth image may then in some cases be divided into two or more regions - e.g., a segmented region corresponding to the back-plate 407 may be divided into three regions. Depth values within each segmented region are then averaged to compute at least three co-linear points used to identify a virtual plane as described above.

In any case, based, at least in part, on images captured by the camera system, the robotic insertion system identifies a segmented image region and a virtual plane. The robotic insertion system then identifies an alignment pose for the cable insert module based on the segmented image region and the virtual plane, where the alignment pose serves as a starting point for an insertion motion used to insert the cable insert module into the module retainer. To this end, returning briefly to FIG. 3, at 308, method 300 includes controlling the articulated robot arm to move the cable insert module to an alignment pose determined based, at least in part, on the segmented image region and the virtual plane.

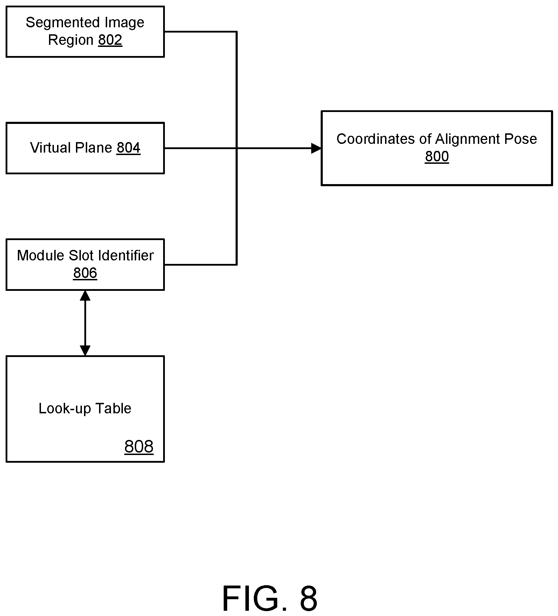

Identification of an alignment pose is schematically illustrated with respect to FIG. 8. Specifically, in FIG. 8, the coordinates of an alignment pose 800 are identified based, at least in part, on a segmented image region 802 and a virtual plane 804 identified as described above. In some examples, a coordinate of the alignment pose relative to a horizontal axis (e.g., an X axis) is determined based at least on a centroid of the set of depth values within the depth image corresponding to the module retainer. See, for instance, the example centroid 508 shown relative to depth image 500C in FIG. 5C. In other words, the alignment pose may be determined such that a center of the end effector (and/or a center of the cable insert module held by the end effector) is at or near the X-axis coordinate of the centroid of the point cloud within the depth image identified as corresponding to the module retainer.

Continuing with FIG. 8, the coordinates of the alignment pose 800 are additionally identified based, at least in part, on the virtual plane. For instance, the virtual plane 804 may be used to identify an orientation of the alignment pose relative to one or more rotational axes - e.g., pitch, roll, and/or yaw. Specifically, in some examples, the coordinates of the alignment pose are set such that, while the cable insert module occupies the alignment pose, a front face of the cable insert module is parallel to the virtual plane, and there is not a significant angular misalignment relative to the module retainer that will interfere with insertion of the cable insert module. In other words, in some examples, a movement path of the cable insert module from the alignment pose toward an insertion pose (at which it is expected that the cable insert module will be fully inserted into the module retainer) is perpendicular to the virtual plane.

In some examples, a coordinate of the alignment pose relative to a vertical axis (e.g., a Y-axis) is determined based on a module slot identifier 806 of the module slot of the module retainer into which the cable insert module is to be inserted. For instance, in the example of FIGS. 4A and 4B, the cable insert module is intended for insertion into a lowest module slot of the module retainer (e.g., module slot 418B), where each module slot is associated with a different unique identifier (e.g., unique slot number). Assuming that the module retainer itself has a known fixed position relative to a coordinate system of the robotic insertion system, then the vertical coordinate of each module slot (and therefore the vertical coordinate of the alignment pose) may be identified based on that slot's unique identifier. For instance, in one example, a coordinate of the alignment pose relative to the vertical axis is retrieved from a look-up table, and indexed in the look-up table by the module slot identifier of the module slot into which the cable insert module is to be inserted. This is schematically illustrated with respect to FIG. 8, in which the coordinates of the alignment pose 800 are determined based, at least in part, on the module slot identifier 806 of the target module slot, and a look-up table 808 providing vertical coordinates corresponding to each module slot.

In some examples, the coordinates of the alignment pose are set such that, once the cable insert module occupies the alignment pose, it is a known distance away from the module retainer relative to an insertion axis (e.g., a Z-axis). For instance, based at least in part on a relative size (e.g., in terms of pixel coordinates) of the module retainer within the captured images, the robotic insertion system may estimate the current distance between the camera system and the module retainer. Based on this estimate, the coordinates of the alignment pose may in some cases be set to increase or decrease the distance between the camera system and the module retainer, such that the cable insert module has a predetermined distance away from the module retainer into which it is to be inserted. As one non-limiting example, the predetermined distance may be approximately 100mm.

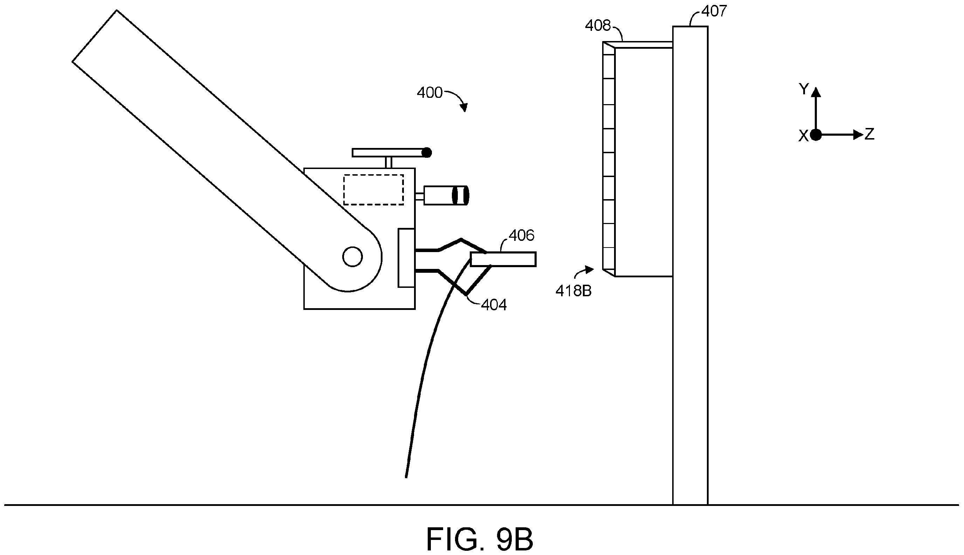

Movements of the articulated robot arm are schematically illustrated with respect to FIGS. 9A-D. Specifically, FIG. 9A again shows the scenario depicted in FIGS. 4A and 4B, where a cable insert module 406 is held by an end effector 404 of a robotic insertion system 400. In this example, an alignment pose for the cable insert module has been identified based on captured images as described above, and is represented in FIG. 9A by an alignment pose indicator 900. Turning to FIG. 9B, the robotic insertion system has controlled movements of the articulated robot arm to move the cable insert module from the position shown in FIG. 9A to assume the alignment pose.

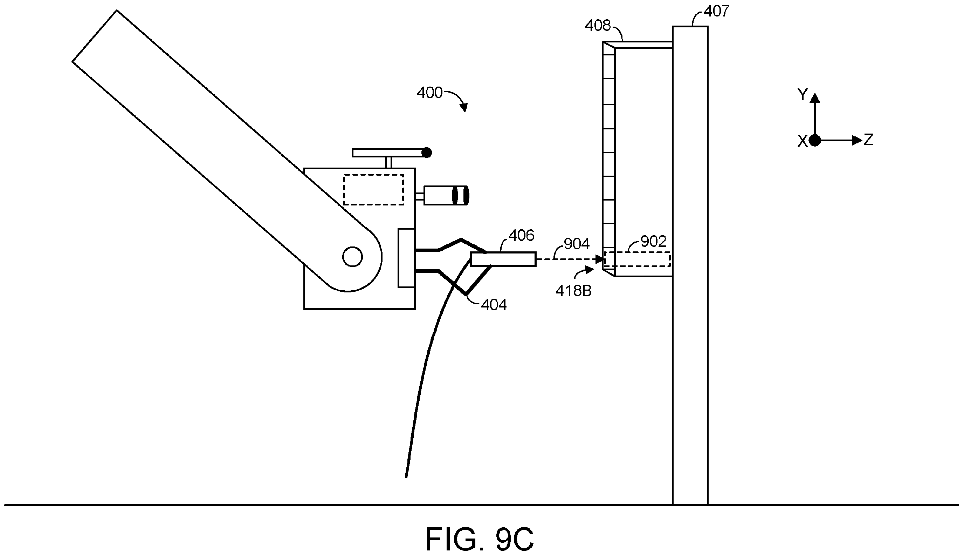

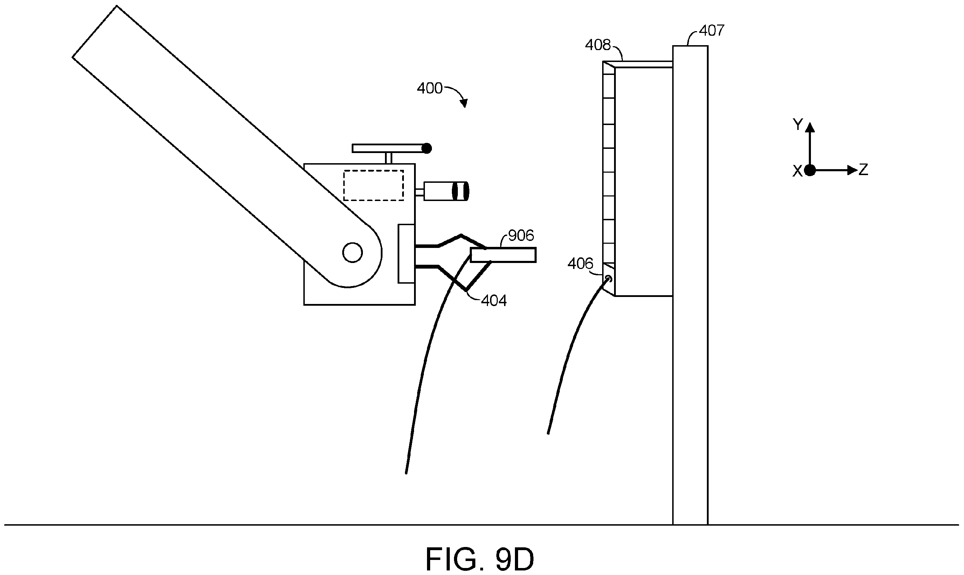

Returning briefly to FIG. 3, at 310, method 300 includes controlling the articulated robot arm to move the cable insert module from the alignment pose toward an insertion pose. This is schematically illustrated with respect to FIGS. 9C and 9D. Specifically, FIG. 9C again shows the scenario depicted in FIG. 9B, in which the cable insert module has been moved to occupy the alignment pose. In this example, the insertion pose is represented by an insertion pose indicator 902. A movement path of the cable insert module from the alignment pose to the insertion pose is shown as a movement path indicator 904. As described above, in some examples the movement path of the cable insert module from the alignment pose toward the insertion pose is perpendicular to the virtual plane.

The specific coordinates of the insertion pose are determined in any suitable way. In some examples, the coordinates of the insertion pose are determined based on the coordinates of the alignment pose. For instance, after identifying the alignment pose as described above, the insertion pose may be determined by translating the alignment pose forward along an insertion axis (e.g., a Z-axis) by a predetermined distance. For example, as described above, the alignment pose is in some cases set such that, once the cable insert module occupies the alignment pose, it is a predetermined distance away from the module retainer. Thus, by translating the alignment pose along the insertion axis by the predetermined distance, the insertion pose may be derived.

Regardless, once the cable insert module occupies the alignment pose, the robotic insert module controls the articulated robot arm to move the cable insert module toward the insertion pose. In some cases, this results in successful insertion of the cable insert module into the cable insert module. As such, returning briefly to FIG. 3, at 312, method 300 includes releasing the cable insert module in the module retainer.

For instance, once the articulated robot arm has been moved to a pose consistent with the cable insert module occupying the insertion pose, the robotic insertion system may determine that a successful insertion has occurred. The robotic insertion system then causes the cable insert module to be released from the end effector, to thereby at least partially assemble a modular cable connector. This may be done in any suitable way. In examples where the end effector is computer-controlled (e.g., the end effector includes gripping prongs that move in response to computer instructions), then the controller of the robotic insertion system controls the end effector to release the cable insert module. For instance, a gripping tool may be controlled to discontinue gripping the cable insert module. Additionally, or alternatively, releasing the cable insert module may include moving the articulated robot arm away from the insertion pose while allowing the cable insert module to remain behind within the module retainer. For instance, an external force (such as friction) exerted by the module retainer on the cable insert module may be sufficient to overcome a retention force exerted by the end effector, causing the end effector to release the cable insert module.

In some examples, prior to releasing the cable insert module from the end effector, the robotic insertion system detects successful insertion of the cable insert module into the module slot. This is done in any suitable way. In the example of FIG. 3, method 300 optionally includes detecting successful insertion by applying a removal force to the cable insert module. This may include, while the end effector is still holding the cable insert module, attempting to pull the cable insert module back toward the alignment pose while monitoring the magnitude of a removal force vector at the force sensor, and/or monitoring a movement distance of the cable insert module. Upon detecting that the magnitude of the removal force vector reaches a retention success threshold, the robotic insertion system determines that the cable insert module is successfully inserted into the module slot, as a retention force exerted by the module retainer is sufficient to hold the cable insert module in place regardless of the removal force applied by the end effector. Any suitable value may be used for the retention success threshold. As one non-limiting example, the retention success threshold may be set to 7lbs.

However, upon detecting that the cable insert module moves by more than a threshold distance before the magnitude of the removal force vector reaches the retention success threshold, the robotic insertion system may detect a failed insertion of the cable insert module. For instance, if the cable insert module moves by a distance of 2mm or more before the retention success threshold has been reached, this may indicate that the cable insert module was not successfully retained within the module slot. In such cases, the robotic insertion system may make one or more subsequent insertion attempts. In some examples, a subsequent insertion attempt may target an updated insertion pose that is some distance away from the original insertion pose along an insertion axis (e.g., a Z axis as labeled in FIGS. 9A-D). For instance, the updated insertion pose may be 0.5mm beyond the original insertion pose along the insertion axis. Insertion attempts may in some causes continue until successful insertion is detected, or a failure condition is reached (e.g., too many failed insertion attempts).

Once the cable insert module is released, the robotic insertion system in some examples inserts a second cable insert module into the module retainer. To this end, after the cable insert module is released, the robotic insertion system in some examples holds a second cable insert module at the end effector for insertion into a second module slot of the module retainer. Furthermore, the end effector is moved such that the second cable insert module occupies a second alignment pose. In some examples, this may include repeating any or all steps of method 300 - e.g., capturing additional images of the module retainer that are used to identify the second alignment pose. Additionally, or alternatively, the second alignment pose may be derived at least partially from the first alignment pose. For example, the coordinates of the second alignment pose may be substantially the same as the first alignment pose, albeit translated relative to a vertical axis (e.g., the Y-axis) based on a slot identifier of the second module slot into which the second cable insert module is to be inserted. It will be understood that this process may be repeated any suitable number of times - e.g., until every module slot of the module retainer is occupied, and/or a predefined number of modules have been inserted.

Successful insertion of a cable insert module into a module retainer is schematically illustrated with respect to FIG. 9D, again showing robotic insertion system 400. In this example, cable insert module 406 has been inserted into module retainer 408 and released. The end effector 404 of the articulated robot arm is now holding a second cable insert module 906 for insertion into the module retainer. By iteratively inserting additional cable insert modules into the module retainer, the modular cable connector may be gradually assembled - e.g., eventually resulting in a modular connector assembly such as is shown in FIG. 2A or 2B.

Notably however, in some examples, movement of the cable insert module from the alignment pose toward the insertion pose may not result in successful insertion of the cable insert module into the module retainer. Rather, translational and/or rotational misalignments between the cable insert module and module retainer can prevent successful insertion. This scenario is in some examples detected by detecting an insertion force vector of the end effector via a force sensor of the robotic insertion system. For instance, as described above with respect to FIGS. 4A and 4B, robotic insertion system 400 includes a force sensor 416, configured to measure an insertion force vector of the end effector while the articulated robot arm is controlled to move the cable insert module from the alignment pose toward the insertion pose.

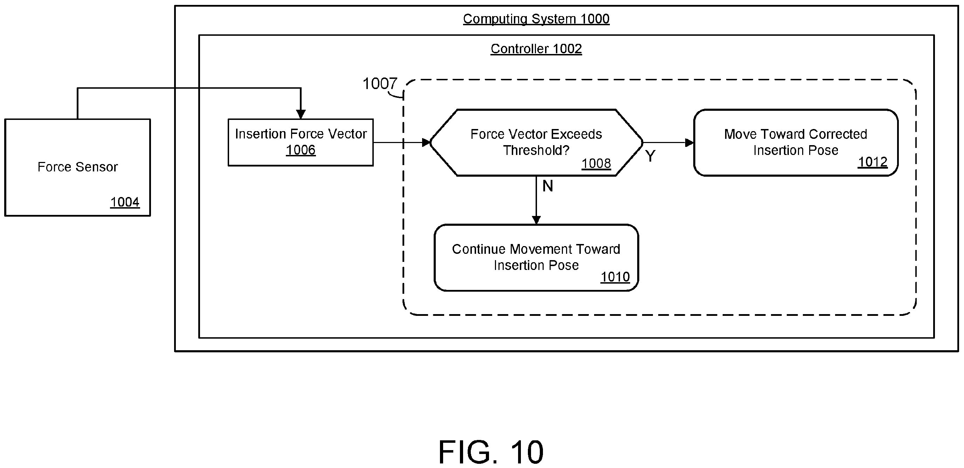

This is schematically illustrated at a high level with respect to FIG. 10. Specifically, FIG. 10 schematically shows a computing system 1000 that includes a controller 1002. The computing system is communicatively coupled with a force sensor 1004, which reports an insertion force vector 1006 during movement of an articulated robot arm. The computing system either is, includes, or is communicatively coupled with a robotic insertion system as described herein. For instance, in some examples, robotic insertion system 400 may be implemented as computing system 1000. In other examples, the computing system may be substantially separate from, but communicatively coupled with, the robotic insertion system. In some examples, computing system 1000 is implemented as computing system 1100 described below with respect to FIG. 11.

The insertion force vector takes any suitable form. In some examples, the insertion force vector includes a magnitude of the current detected force, and a direction in which the force is applied. Furthermore, the insertion force vector may be reported with any suitable frequency. As one example, the insertion force vector may be continuously reported - e.g., whenever the robotic insertion system is powered on, and/or whenever the articulated robot arm is being moved. In some examples, the insertion force vector is only reported upon a magnitude of the insertion force vector exceeding a threshold, which may indicate a problem with the insertion process.

In the example of FIG. 10, once the controller receives the insertion force vector, it performs a force monitoring process 1007 to evaluate the success of the current insertion operation. At 1008, the force monitoring process includes determining whether a magnitude of the insertion force vector exceeds an insertion failure threshold. Any specific value of the insertion failure threshold may be used depending on the specific implementation - e.g., depending on the capabilities of the articulated robot arm, the sensitivity of the force sensor, and/or the material properties of the cable insert module and module retainer. Upon determining that the magnitude of the insertion force vector does not exceed the threshold (No at 1008), then the process proceeds to 1010, where the robotic insertion system continues moving the cable insert module toward the insertion pose.

Alternatively, upon determining that the magnitude of the insertion force vector does exceed the insertion failure threshold (Yes at 1008), the process proceeds to 1012, where the robotic insertion system controls the articulated robot arm to move the cable insert module toward a corrected insertion pose. The corrected insertion pose is determined in any suitable way. In some examples, the corrected insertion pose is determined based on a direction of the insertion force vector. For instance, if a misalignment causes the cable insert module to catch on a left side of the module retainer, then a direction of the insertion force vector will likely point to the right. Thus, determining the corrected insertion pose may include translating the prior insertion pose by a fixed amount (e.g., 1mm) in the direction of the insertion force vector. This may be repeated any suitable number of times until successful insertion is achieved, or another failure condition is reached (e.g., too many corrections to the insertion pose may eventually be classified as a failed insertion, causing the insertion process to be terminated).

The methods and processes described herein may be tied to a computing system of one or more computing devices. In particular, such methods and processes may be implemented as an executable computer-application program, a network-accessible computing service, an application-programming interface (API), a library, or a combination of the above and/or other compute resources.

FIG. 11 schematically shows a simplified representation of a computing system 1100 configured to provide any to all of the compute functionality described herein. Computing system 1100 may take the form of one or more network-accessible devices, personal computers, server computers, mobile computing devices, and/or other computing devices.

Computing system 1100 includes a logic subsystem 1102 and a storage subsystem 1104. Computing system 1100 may optionally include a display subsystem 1106, input subsystem 1108, communication subsystem 1110, and/or other subsystems not shown in FIG. 11.

Logic subsystem 1102 includes one or more physical devices configured to execute instructions. For example, the logic subsystem may be configured to execute instructions that are part of one or more applications, services, or other logical constructs. The logic subsystem may include one or more hardware processors configured to execute software instructions. Additionally, or alternatively, the logic subsystem may include one or more hardware or firmware devices configured to execute hardware or firmware instructions. Processors of the logic subsystem may be single-core or multi-core, and the instructions executed thereon may be configured for sequential, parallel, and/or distributed processing. Individual components of the logic subsystem optionally may be distributed among two or more separate devices, which may be remotely located and/or configured for coordinated processing. Aspects of the logic subsystem may be virtualized and executed by remotely-accessible, networked computing devices configured in a cloud-computing configuration.

Storage subsystem 1104 includes one or more physical devices configured to temporarily and/or permanently hold computer information, such as data and instructions executable by the logic subsystem. When the storage subsystem includes two or more devices, the devices may be collocated and/or remotely located. Storage subsystem 1104 may include volatile, nonvolatile, dynamic, static, read/write, read-only, random-access, sequential-access, location-addressable, file-addressable, and/or content-addressable devices. Storage subsystem 1104 may include removable and/or built-in devices. When the logic subsystem executes instructions, the state of storage subsystem 1104 may be transformed - e.g., to hold different data.

Aspects of logic subsystem 1102 and storage subsystem 1104 may be integrated together into one or more hardware-logic components. Such hardware-logic components may include program- and application-specific integrated circuits (PASIC / ASICs), program- and application-specific standard products (PSSP / ASSPs), system-on-a-chip (SOC), and complex programmable logic devices (CPLDs), for example.

The logic subsystem and the storage subsystem may cooperate to instantiate one or more logic machines. As used herein, the term "machine" is used to collectively refer to the combination of hardware, firmware, software, instructions, and/or any other components cooperating to provide computer functionality. In other words, "machines" are never abstract ideas and always have a tangible form. A machine may be instantiated by a single computing device, or a machine may include two or more sub-components instantiated by two or more different computing devices. In some implementations a machine includes a local component (e.g., software application executed by a computer processor) cooperating with a remote component (e.g., cloud computing service provided by a network of server computers). The software and/or other instructions that give a particular machine its functionality may optionally be saved as one or more unexecuted modules on one or more suitable storage devices.

When included, display subsystem 1106 may be used to present a visual representation of data held by storage subsystem 1104. This visual representation may take the form of a graphical user interface (GUI). Display subsystem 1106 may include one or more display devices utilizing virtually any type of technology. In some implementations, display subsystem may include one or more virtual-, augmented-, or mixed reality displays.

When included, input subsystem 1108 may comprise or interface with one or more input devices. An input device may include a sensor device or a user input device. Examples of user input devices include a keyboard, mouse, touch screen, or game controller. In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition.

When included, communication subsystem 1110 may be configured to communicatively couple computing system 1100 with one or more other computing devices. Communication subsystem 1110 may include wired and/or wireless communication devices compatible with one or more different communication protocols. The communication subsystem may be configured for communication via personal-, local- and/or wide-area networks.

This disclosure is presented by way of example and with reference to the associated drawing figures. Components, process steps, and other elements that may be substantially the same in one or more of the figures are identified coordinately and are described with minimal repetition. It will be noted, however, that elements identified coordinately may also differ to some degree. It will be further noted that some figures may be schematic and not drawn to scale. The various drawing scales, aspect ratios, and numbers of components shown in the figures may be purposely distorted to make certain features or relationships easier to see.

In an example, a method for assembly of a modular cable connector comprises: at an end effector affixed to an articulated robot arm of a robotic insertion system, holding a cable insert module for insertion into a module slot of a module retainer; via a camera system of the robotic insertion system, capturing two or more images of the module retainer, wherein at least one of the two or more images is captured while the module retainer is illuminated by a laser alignment system of the robotic insertion system; at a controller of the robotic insertion system, performing image processing on the two or more images to identify a segmented image region corresponding to the module retainer, and to identify a virtual plane parallel to a face of the module retainer; controlling the articulated robot arm to move the cable insert module to an alignment pose determined based, at least in part, on the segmented image region and the virtual plane; controlling the articulated robot arm to move the cable insert module from the alignment pose toward an insertion pose; and upon insertion of the cable insert module into the module slot of the module retainer, releasing the cable insert module from the end effector to thereby at least partially assemble the modular cable connector. In this example or any other example, the method further comprises, while controlling the articulated robot arm to move the cable insert module from the alignment pose toward the insertion pose, detecting an insertion force vector of the end effector via a force sensor of the robotic insertion system. In this example or any other example, the method further comprises, based on detecting that a magnitude of the insertion force vector exceeds an insertion failure threshold, controlling the articulated robot arm to move the cable insert module toward a corrected insertion pose determined based on a direction of the insertion force vector. In this example or any other example, the method further comprises, prior to releasing the cable insert module from the end effector, detecting successful insertion of the cable insert module into the module slot by applying a removal force to the cable insert module, and detecting that a magnitude of a removal force vector detected via the force sensor exceeds a retention success threshold. In this example or any other example, the method further comprises, after releasing the cable insert module from the end effector, holding a second cable insert module at the end effector for insertion into a second module slot of the module retainer from a second alignment pose. In this example or any other example, a movement path of the cable insert module from the alignment pose toward the insertion pose is perpendicular to the virtual plane. In this example or any other example, a coordinate of the alignment pose relative to a vertical axis is retrieved from a look-up table, and indexed in the look-up table by a module slot identifier of the module slot of the module retainer into which the cable insert module is to be inserted. In this example or any other example, the camera system includes an RGB camera and a depth camera, and wherein the two or more images include an RGB image captured by the RGB camera, and a depth image captured by the depth camera. In this example or any other example, the segmented image region is identified based, at least in part, on detecting laser glints caused by illumination of the module retainer by the laser alignment system. In this example or any other example, said detecting the laser glints includes capturing the RGB image while the module retainer is illuminated by the laser alignment system, capturing a second RGB image after deactivation of the laser alignment system, and performing an image subtraction operation based on the RGB image and the second RGB image to generate a third RGB image. In this example or any other example, the segmented image region is detected based on pixel values of the third RGB image. In this example or any other example, the segmented image region is identified based, at least in part, on pixel values of the RGB image, and applied to the depth image based on a known alignment between the RGB camera and the depth camera, to thereby identify a set of depth values within the depth image corresponding to the module retainer. In this example or any other example, the alignment pose is determined based, at least in part, on a centroid of the set of depth values within the depth image corresponding to the module retainer. In this example or any other example, the virtual plane is identified, at least in part, by averaging a subset of the depth values within the depth image. In this example or any other example, one or more cable wires are inserted into the cable insert module prior to insertion of the cable insert module into the module retainer.

In an example, a robotic insertion system comprises: an articulated robot arm equipped with an end effector; a laser alignment system; a camera system; and a controller configured to: receive, via the camera system, two or more images captured of a module retainer into which a cable insert module is to be inserted into a module slot by the end effector, wherein at least one of the two or more images is captured while the module retainer is illuminated by the laser alignment system; perform image processing on the two or more images to identify a segmented image region corresponding to the module retainer, and to identify a virtual plane parallel to a face of the module retainer; control movements of the articulated robot arm to move the cable insert module to an alignment pose determined based, at least in part, on the segmented image region and the virtual plane; control movements of the articulated robot arm to move the cable insert module from the alignment pose toward an insertion pose; and upon insertion of the cable insert module into the module slot of the module retainer, control the end effector to release the cable insert module and thereby at least partially assemble a modular cable connector assembly. In this example or any other example, the controller is further configured to, while the cable insert module is moved from the alignment pose toward the insertion pose, detect an insertion force vector of the end effector via a force sensor of the robotic insertion system, and based on detecting that a magnitude of the insertion force vector exceeds an insertion failure threshold, move the cable insert module toward a corrected insertion pose determined based on a direction of the insertion force vector. In this example or any other example, the camera system includes an RGB camera and a depth camera, and wherein the two or more images include an RGB image captured by the RGB camera, and a depth image captured by the depth camera. In this example or any other example, the segmented image region is identified based, at least in part, on pixel values of the RGB image, and applied to the depth image based on a known alignment between the RGB camera and the depth camera, to thereby identify a set of depth values within the depth image corresponding to the module retainer. In this example or any other example, the alignment pose is determined based, at least in part, on a centroid of the set of depth values within the depth image corresponding to the module retainer.

In an example, a computing system comprises: a logic subsystem; and a storage subsystem holding instructions executable by the logic subsystem to: receive, via a camera system, two or more images captured of a module retainer into which a cable insert module is to be inserted into a module slot by an end effector of an articulated robot arm, wherein at least one of the two or more images is captured while the module retainer is illuminated by a laser alignment system; perform image processing on the two or more images to identify a segmented image region corresponding to the module retainer, and to identify a virtual plane parallel to a face of the module retainer; control movements of the articulated robot arm to move the cable insert module to an alignment pose determined based, at least in part, on the segmented image region and the virtual plane; control movements of the articulated robot arm to move the cable insert module from the alignment pose toward an insertion pose; and upon insertion of the cable insert module into the module slot of the module retainer, control the end effector to release the cable insert module and thereby at least partially assemble a modular cable connector assembly.

List of Reference Signs

Modular cable connector assembly 100
Cable wires 102A-D
Cable insert modules 104A-D
Cable insertion recesses 105A, B
Connectivity interfaces 106A-D
Module retainers 108A, B
Module slots 110A, B
Retainer alignment adapter 112
Modular cable connector assemblies 200A, 200B
Module retainers 202A, B
Cable insert modules 202A-D

Cables 206A, B
Method 300
Method steps 302, 304, 306, 308, 310, 312
Robotic insertion system 400
Articulated robot arm 402
End effector 404
Cable insert module 406
Back plate 407
Module retainer 408
Camera system 409
RGB camera 410A
Depth camera 410B
Laser alignment system 412
Controller 414
Force sensor 416
Module slots 418A, B
Cable wire 420
RGB images 500A, 500B
Depth image 500C
Laser glints 502A-C
Segmented image region 504
Virtual plane 506
Centroid 508
Computing system 600
Controller 602
Camera system 604
Images 606
Image processing steps 608
Segmented image region 610
Virtual plane 612
Camera system 700
First and second RGB images 702A, B
Image subtraction operation 703
Third RGB image 704
Segmented image region 706
Depth image 708
Virtual pane 710
Coordinates of alignment pose 800
Segmented image region 802
Virtual plane 804
Module slot identifier 806
Look-up table 808
Alignment pose indicator 900
Insertion pose indicator 902
Movement path indicator 904
Cable insert module 906
Computing system 1000
Controller 1002
Force sensor 1004
Insertion force vector 1006
Force monitoring process 1007
Force monitoring process steps 1008, 1010, 1012
Computing system 1100
Logic subsystem 1102
Storage subsystem 1104
Display subsystem 1106
Input subsystem 1108
Communications subsystem 1110

**Claims**

1. A method (300) for assembly of a modular cable connector (200A), the method (300) comprising:

   at an end effector (404) affixed to an articulated robot arm (402) of a robotic insertion system (400), holding a cable insert module (406) for insertion into a module slot (418B) of a module retainer (408);
   via a camera system (409) of the robotic insertion system (400), capturing two or more images (500A-C) of the module retainer (408), wherein at least one of the two or more images (500A-C) is captured while the module retainer (408) is illuminated by a laser alignment system (412) of the robotic insertion system (400);
   at a controller (414) of the robotic insertion system (400), performing image processing on the two or more images (500A-C) to identify a segmented image region (504) corresponding to the module retainer (408), and to identify a virtual plane (506) parallel to a face of the module retainer (408);
   controlling the articulated robot arm (402) to move the cable insert module (406) to an alignment pose (900) determined based at least in part on the segmented image region (504) and the virtual plane (506);
   controlling the articulated robot arm (402) to move the cable insert module (406) from the alignment pose (900) toward an insertion pose (902); and
   upon insertion of the cable insert module (406) into the module slot (418B) of the module retainer (408), releasing the cable insert module (406) from the end effector (404) to thereby at least partially assemble the modular cable connector (200A).

2. The method (300) of claim 1, further comprising, while controlling the articulated robot arm (402) to move the cable insert module (406) from the alignment pose (900) toward the insertion pose (902), detecting an insertion force vector (1006) of the end effector (404) via a force sensor (416) of the robotic insertion system (400).

3. The method (300) of claim 2, further comprising, based on detecting that a magnitude of the insertion force vector (1006) exceeds an insertion failure threshold (1008), controlling the articulated robot arm (402) to move the cable insert module (406) toward a corrected insertion pose (1012) determined based on a direction of the insertion force vector (1006), and/or
   prior to releasing the cable insert module (406) from the end effector (404), detecting successful insertion of the cable insert module (406) into the module slot (418B) by applying a removal force to the cable insert module (406), and detecting that a magnitude of a removal force vector detected via the force sensor (416) exceeds a retention success threshold.

4. The method (300) of any one of claims 1-3, further comprising, after releasing the cable insert module (406) from the end effector (404), holding a second cable insert module (906) at the end effector (404) for insertion into a second module slot (418A) of the module retainer (408) from a second alignment pose.

5. The method (300) of any one of claims 1-4, wherein a movement path (904) of the cable insert module (406) from the alignment pose (900) toward the insertion pose (902) is perpendicular to the virtual plane (506).

6. The method (300) of any one of claims 1 - 5, wherein a coordinate of the alignment pose (900) relative to a vertical axis is retrieved from a look-up table (808), and indexed in the look-up (808) table by a slot identifier (806) of the module slot (418B) of the module retainer (408) into which the cable insert module (406) is to be inserted.

7. The method (300) of any one of claims 1-6, wherein the camera system (409) includes an RGB camera (410A) and a depth camera (410B), and wherein the two or more images (500A-C) include an RGB image (500A) captured by the RGB camera (409A), and a depth image (500C) captured by the depth camera (410B),

   wherein the segmented image region (504) is preferably identified based at least in part on detected laser glints (502A-C) caused by illumination of the module retainer (408) by the laser alignment system (412) and wherein detecting the laser glints (502A-C) preferably includes capturing the RGB image (500A) while the module retainer (408) is illuminated by the laser alignment system (412), capturing a second RGB image (500B) after deactivation of the laser alignment system (412), and performing an image subtraction operation (703) based on the RGB image (500A) and the second RGB image (500B) to generate a third RGB image (704) and wherein the segmented image region (504) is preferably detected based on pixel values of the third RGB image (704).

8. The method (300) of claim 7, wherein the segmented image region (504) is identified based at least in part on pixel values of the RGB image (500A), and applied to the depth image (500C) based on a known alignment between the RGB camera (410A) and the depth camera (410B), to thereby identify a set of depth values within the depth image (500C) corresponding to the module retainer (408),

wherein the alignment pose (900) is preferably determined based at least in part on a centroid (508) of the set of depth values within the depth image (500C) corresponding to the module retainer (408) and/or wherein the virtual plane (506) is identified at least in part by averaging a subset of the depth values within the depth image (500C).

9. The method (300) of any one of claims 1-8, wherein one or more cable wires (420) are inserted into the cable insert module (406) prior to insertion of the cable insert module (406) into the module retainer (408).

10. A robotic insertion system (400), comprising:

an articulated robot arm (402) equipped with an end effector (404);
a laser alignment system (412);
a camera system (409); and
a controller (414) configured to:

receive, via the camera system (409), two or more images (500A-C) captured of a module retainer (408) into which a cable insert module (406) is to be inserted by the end effector (404), wherein at least one of the two or more images (500A-C) is captured while the module retainer (408) is illuminated by the laser alignment system (412);
perform image processing (703) on the two or more images (500A-C) to identify a segmented image region (504) corresponding to the module retainer (408), and to identify a virtual plane (506) parallel to a face of the module retainer (408);
control movements of the articulated robot arm (402) to move the cable insert module (406) to an alignment pose (900) determined based at least in part on the segmented image region (504) and the virtual plane (506);
control movements of the articulated robot arm (402) to move the cable insert module (406) from the alignment pose (900) toward an insertion pose (902); and
upon insertion of the cable insert module (406) into the module slot (418B) of the module retainer (408), control the end effector (404) to release the cable insert module (404) and thereby at least partially assemble a modular cable connector assembly (200A).

11. The robotic insertion system (400) of claim 10, wherein the controller (414) is further configured to, while the cable insert module (406) is moved from the alignment pose (900) toward the insertion pose (902), detect an insertion force vector (1006) of the end effector (404) via a force sensor (416) of the robotic insertion system (400), and based on detecting that a magnitude of the insertion force vector (1006) exceeds an insertion failure threshold (1008), move the cable insert module (406) toward a corrected insertion (1012) pose determined based on a direction of the insertion force vector (1006).

12. The robotic insertion system (400) of any one of claims 10 - 11, wherein the camera system (409) includes an RGB camera (410A) and a depth camera (410B), and wherein the two or more images (500A-C) include an RGB image (500A) captured by the RGB camera (410A), and a depth image (500C) captured by the depth camera (410B).

13. The robotic insertion system (400) of claim 12, wherein the segmented image region (404) is identified based at least in part on pixel values of the RGB image (500A), and applied to the depth image (500C) based on a known alignment between the RGB camera (410A) and the depth camera (410B), to thereby identify a set of depth values within the depth image (500C) corresponding to the module retainer (406).

14. The robotic insertion system (400) of claim 13, wherein the alignment pose (900) is determined based at least in part on a centroid (508) of the set of depth values within the depth image (500C) corresponding to the module retainer (408).

15. A computing system (1100), comprising:

a logic subsystem (1102); and
a storage subsystem (1104) holding instructions executable by the logic subsystem (1102) to:

receive, via a camera system (409), two or more images (500A-C) captured of a module retainer (408) into which a cable insert module (406) is to be inserted by an end effector (404) of an articulated robot arm (402), wherein at least one of the two or more images (500A-C) is captured while the module retainer (408) is illuminated by a laser alignment system (412);

perform image processing on the two or more images (500A-C) to identify a segmented image region (504) corresponding to the module retainer (408), and to identify a virtual plane (506) parallel to a face of the module retainer (408);

control movements of the articulated robot arm (402) to move the cable insert module (406) to an alignment pose (900) determined based at least in part on the segmented image region (504) and the virtual plane (506);

control movements of the articulated robot arm (402) to move the cable insert module (406) from the alignment pose (900) toward an insertion pose (902); and

upon insertion of the cable insert module (406) into the module slot (418B) of the module retainer (408), control the end effector (404) to release the cable insert module (406) and thereby at least partially assemble a modular cable connector assembly (200A).

FIG. 1

EP 4 520 486 A1

FIG. 2A

FIG. 2B

300

```
┌─────────────────────────────────────────────────────┐
│  HOLD A CABLE INSERT MODULE AT AN END EFFECTOR OF AN │
│              ARTICULATED ROBOT ARM                   │
│                                                 302  │
└─────────────────────────────────────────────────────┘
                         │
                         ▼
┌─────────────────────────────────────────────────────┐
│   VIA A CAMERA SYSTEM, CAPTURE TWO OR MORE IMAGES OF A│
│                 MODULE RETAINER                      │
│                                                 304  │
└─────────────────────────────────────────────────────┘
                         │
                         ▼
┌─────────────────────────────────────────────────────┐
│   PERFORM IMAGE PROCESSING ON THE TWO OR MORE IMAGES │
│   TO IDENTIFY A SEGMENTED IMAGE REGION AND A VIRTUAL │
│                      PLANE                           │
│                                                 306  │
└─────────────────────────────────────────────────────┘
                         │
                         ▼
┌─────────────────────────────────────────────────────┐
│   MOVE THE CABLE INSERT MODULE TO AN ALIGNMENT POSE  │
│                                                 308  │
└─────────────────────────────────────────────────────┘
                         │
                         ▼
┌─────────────────────────────────────────────────────┐
│  MOVE THE CABLE INSERT MODULE FROM THE ALIGNMENT POSE│
│               TOWARD AN INSERTION POSE               │
│                                                 310  │
└─────────────────────────────────────────────────────┘
                         │
                         ▼
┌ ─ ─ ─ ─ ─ ─ ─ ─ ─ ─ ─ ─ ─ ─ ─ ─ ─ ─ ─ ─ ─ ─ ─ ─ ─ ┐
│   DETECT SUCCESSFUL INSERTION BY APPLYING REMOVAL   │
│              FORCE TO CABLE INSERT MODULE            │
│                                                 311 │
└ ─ ─ ─ ─ ─ ─ ─ ─ ─ ─ ─ ─ ─ ─ ─ ─ ─ ─ ─ ─ ─ ─ ─ ─ ─ ┘
                         │
                         ▼
┌─────────────────────────────────────────────────────┐
│    RELEASE THE CABLE INSERT MODULE IN THE MODULE     │
│                     RETAINER                         │
│                                                 312  │
└─────────────────────────────────────────────────────┘
```

FIG. 3

FIG. 4A

EP 4 520 486 A1

FIG. 4B

FIG. 5B

FIG. 5A

FIG. 5C

FIG. 6

First RGB Image
702A

Second RGB image
702B

Subtraction Operation

703

Camera System

700

Third RGB Image 704

Segmented Image
Region 706

Depth Image 708

Virtual Plane 710

# FIG. 7

Segmented Image Region 802

Virtual Plane 804

Module Slot Identifier 806

Coordinates of Alignment Pose 800

Look-up Table

808

FIG. 8

FIG. 9A

FIG. 9B

FIG. 9C

FIG. 9D

**FIG. 10**

COMPUTING SYSTEM 1100

LOGIC SUBSYSTEM 1102

STORAGE SUBSYSTEM 1104

DISPLAY SUBSYSTEM 1106

INPUT SUBSYSTEM 1108

COMMUNICATIONS SUBSYSTEM 1110

FIG. 11

Europäisches
Patentamt

European
Patent Office

Office européen
des brevets

# EUROPEAN SEARCH REPORT

Application Number

EP 24 19 4530

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2016 058320 A (YAZAKI CORP) 21 April 2016 (2016-04-21) * paragraph [0021] * * paragraph [0047] - paragraph [0053] * * paragraph [0059] - paragraph [0063] * * paragraph [0068] - paragraph [0069] * * paragraph [0079] * * figures 1, 2, 4, 5, 37A, 37B * ----- | 1-15 | INV. B25J9/16 H01R43/20 H01R43/26 |
| X | US 2021/399470 A1 (HOFFMANN HEIKO [US]) 23 December 2021 (2021-12-23) * paragraph [0042] * * paragraph [0047] - paragraph [0049] * * paragraph [0061] - paragraph [0068] * * paragraph [0072] - paragraph [0073] * * paragraph [0077] - paragraph [0079] * * figures 4, 5, 12, 14 * ----- | 1-15 | |
| A | JP 2023 023364 A (NACHI FUJIKOSHI CORP) 16 February 2023 (2023-02-16) * the whole document * ----- | 1-15 | |

TECHNICAL FIELDS
SEARCHED (IPC)

B25J
H01R
G05B

The present search report has been drawn up for all claims

| Place of search | Date of completion of the search | Examiner |
|---|---|---|
| The Hague | 20 January 2025 | Falconi, Riccardo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 19 4530

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2025

| Patent document cited in search report | Publication date | Patent family member(s) | | Publication date |
|---|---|---|---|---|
| JP 2016058320 A | 21-04-2016 | JP | 6069275 B2 | 01-02-2017 |
| | | JP | 2016058320 A | 21-04-2016 |
| US 2021399470 A1 | 23-12-2021 | NONE | | |
| JP 2023023364 A | 16-02-2023 | CN | 114512880 A | 17-05-2022 |
| | | JP | 7057537 B1 | 20-04-2022 |
| | | JP | 2023023364 A | 16-02-2023 |
| | | TW | 202306719 A | 16-02-2023 |
| | | WO | 2023013262 A1 | 09-02-2023 |

EPO FORM P0459

For more details about this annex : see Official Journal of the European Patent Office, No. 12/82